# EUROPEAN PATENT APPLICATION

(11) **EP 3 290 874 A1**
(43) Date of publication of application: **07.03.2018**
(21) Application number: 17189415.7
(22) Date of filing: 05.09.2017
(51) Int. Cl.: G01F 1/708, G01F 1/712, G01F 1/72

(54) **IN-CYLINDER FLOW MEASURING METHOD IN AN INTERNAL COMBUSTION ENGINE AND SYSTEM THEREOF**

(30) Priority: 05.09.2016 JP 2016172518
(71) Applicant: Imagineering, Inc., Kobe-shi, Hyogo 650-0047 (JP)
(72) Inventor: KHOI LE, Minh, Kobe-shi, Hyogo 650-0047 (JP); FURUI, Takashi, Kobe-shi, Hyogo 650-0047 (JP); IKEDA, Yuji, Kobe-shi, Hyogo 650-0047 (JP)
(74) Representative: Smith, Matthew

(57) **Abstract**

**PROBLEMS TO BE SOLVED**

To provide an in-cylinder flow measuring method and a system thereof in an internal combustion engine configured to grasp simultaneously an air-fuel mixture flow and the flame behavior in the flow field under the firing condition.

**MEANS FOR SOLVING PROBLEMS**

The in-cylinder flow measuring system comprises an engine 10 having an optically-visible cylinder from at least one direction selected from three directions comprising a direction from a cylinder linear, a direction from a pent-roof, and a direction from a piston top such that a flow occurring inside the cylinder can be measured, a solid tracer particle supplier 2A configured to supply a solid tracer particle into the cylinder of the engine during an intake stroke, a liquid tracer particle supplier 2B configured to supply a liquid tracer particle into the cylinder of the engine during the intake stroke, a laser irradiation apparatus 3 comprising a light source 30 for irradiating a laser light and configured to form a laser sheet inside the cylinder by the laser light irradiated from the light source 30, an imaging apparatus 4 configured to capture an image of the inside of the cylinder in which the laser sheet is formed by the laser irradiation apparatus 3, a controller 6 configured to synchronize an oscillation period for the laser irradiation apparatus 3 to irradiate the laser light with a frame rate for the imaging apparatus 4 to capture the image, and an analyzer 5 configured to analyze the image captured by the imaging apparatus 4.

## Description

### TECHNICAL FIELD

The present invention relates to an in-cylinder measuring method in an internal combustion engine and a system thereof.

### BACKGROUND ART

Conventionally, the enhancement of air-fuel mixture flow in cylinder (in below, may referred to "in-cylinder flow") is a factor that largely contributes to an engine combustion, and, in the field of high efficiency engine development, it becomes more important to understand the in-cylinder flow characteristic. "Laser Doppler Velocimetry (in below, may referred to merely "LDV")" and "Particle Image Velocimetry (in below, may referred to merely "PIV")" are raised as examples of in-cylinder flow measuring method.

"LDV," because of adopting a spot measuring system, requires to move a measured point in order to grasp a spatial distribution. On the other hand, "PIV" can measure the spatial distribution at once, and therefore, the practical realization of high speed "PIV," has been developed. It was difficult to measure and evaluate the state of air-fuel mixture flow and the flame expansion under the firing condition by "PIV," since much of in-cylinder flow measurement by "PIV" is adapted to measure and evaluate the air-fuel mixture flow under non-firing condition. Therefore, expectation to the in-cylinder flow measurement and evaluation including remained gas, effect by flame with respect to the flow, and combustion inconsiderable under non-firing condition, has been heightened. In these days, "PIV" that measures and evaluates the complex flow at the combustion field, passing-through flow of turbo-machine impeller, or three-dimensional flow structure, has been developed. In the in-cylindrical flow measurement of the internal combustion engine using "PIV," a minute and fine particle called for "tracer particle" is thrown into. Kind of tracer particle in use is selected properly based on the fluid type. Generally, the solid particle, for example, titanium oxide, TiO₂ particle, is adopted at the combustion field, and the liquid tracer particle such as a minute and fine liquid drop of atomizing water and olive oil, or smoke is used in the field except for the combustion field, for example, at the opened space such as wind tunnel.

In Patent Document 1, it is described that the measurement by using "PIV" and etc., can be performed, suppressing or preventing halation or blooming phenomenon, at the flow field with high luminance where the luminance varies in short time interval such as reaction field of combustion or explosion of an internal combustion engine. Moreover, in Patent Document 1, it is described to perform "PIV" measurement, under firing condition, by capturing images at optical part by using CCD camera provided with image sensor. Concretely, the optical attenuator constituted of the blooming-suppressing liquid crystal panel for reducing the transparent luminosity amount according to the increase of applied voltage, is used. By the optical attenuator, the transparent luminosity amount is reduced according to high luminance ignition performance and explosion phenomenon generated inside the combustion chamber, and the luminosity loss amount becomes optimized. In this state, laser beam is emitted into the flow field, and then, the image-capturing of tracer particles is performed by reflection light of the tracer particles. Based on the datum of the particles images at successive two time intervals for minimum-tight period, speed vector or velocity element of the visualized inner flow, for example, is measured. Moreover, in Patent Document 2, it is described to measure the air-fuel mixture flow under motoring condition of the internal combustion engine.

### PRIOR ART DOCUMENTS

### PATENT DOCUMENT(S)

Patent Document 1: Japanese unexamined patent application publication No. 2015-206689
Patent Document 2: Japanese Patent No. 5963087

### SUMMARY OF INVENTION

### PROBLEM TO BE SOLVED BY INVENTION

At the engine combustion field, the solid tracer particle with high burning resistance is effective. However, it is a problem that, after throwing the solid tracer particle into, the luminance between a burned part and an unburned part at the combustion field is different. Concretely explained, in the case of the liquid tracer particle, the luminosity is not scattered since it goes disappearing at the burned part. Moreover, in the case of adopting the solid tracer particle as measurement means of the Patent Document 1, even if the solid tracer particle has high burning resistance characteristic, the particle number in density at the burned part is reduced by expansion. Since there is a case where the particle number in density may become zero, the burned part relatively becomes dark, on the other hand, the unburned part becomes brightened. Accordingly, in a case where the unburned part is adjusted to have a proper luminance, it becomes difficult to analyze since the burned part is dark. Conversely, in a case where the combustion part is adjusted to have a proper luminance, there is a problem that it is difficult to analyze since the luminance of the unburned part becomes saturated.

Moreover, when the flame thickness becomes larger in the high intensity turbulence field, there is a problem that a boundary between the burned part and the unburned part becomes unclear, and as the result, it is difficult to define a flame position functioning as a boundary line.

The present invention is made from the above viewpoints. The objective of the present invention is to provide an in-cylinder flow measuring method in an internal combustion engine and a system thereof that can grasp simultaneously an air-fuel mixture flow and a flame behavior inside a flow field under firing condition.

### MEANS FOR SOLVING PROBLEM

A first invention is to provide an in-cylinder flow measuring system that comprises an engine having an optically-visible cylinder from at least one direction selected from three directions comprising a direction from a cylinder linear, a direction from a pent-roof, and a direction from a piston top such that a flow occurring inside the cylinder can be measured, a solid tracer particle supplier configured to supply a solid tracer particle into the cylinder of the engine during an intake stroke, a liquid tracer particle supplier configured to supply a liquid tracer particle into the cylinder of the engine during the intake stroke, a laser irradiation apparatus comprising a light source for irradiating a laser light and configured to form a laser sheet inside the cylinder by the laser light irradiated from the light source, an imaging apparatus configured to capture an image of the inside of the cylinder in which the laser sheet is formed by the laser irradiation apparatus, a controller configured to synchronize an oscillation period for the laser irradiation apparatus to irradiate the laser light with a frame rate for the imaging apparatus to capture the image, and an analyzer configured to analyze the image captured by the imaging apparatus.

A second invention is to provide a method of measuring a flow occurring inside a cylinder of an engine which is optically visible from at least one direction selected from three directions comprising a direction from a cylinder linear, a direction from a pent-roof, and a direction from a piston top. The method comprises irradiating a laser light from a light source into the cylinder and forming a laser sheet with the laser light inside the cylinder, supplying separately a liquid tracer particle and a solid tracer particle together with an air-fuel mixture into the cylinder of the engine during an intake stroke, igniting the air-fuel mixture, thereby forming a flame, which involves a flow of an unburned air-fuel mixture and a flow of burned gas, while capturing an image in the cylinder at a timing around a top dead center during a compression stroke, such that the image indicates a disappearance of a scattering light from the liquid tracer particle that exists at an outer edge of the flame through evaporation of the liquid tracer particles caused by the ignition of the air-fuel mixture and indicates movements of the liquid tracer particle and the solid tracer particle in accordance with the flow of the unburned mixture and a movement of the solid tracer particle in accordance with the flow of the unburned mixture and the flow of the burned gas, and analyzing the captured image to measure the flow occurring inside the cylinder.

In this specification, the vicinity of the compression top dead center (TDC) means the range including from the immediately before the compression top dead center to the immediately after, i.e., the compression and expansion stroke.

### EFFECT OF INVENTION

According to an in-cylinder flow measuring method in an internal combustion chamber and a system thereof, an in-cylinder flow before and after the compression top dead center and an initial flame under the firing condition can be visualized. By combining for use of a solid tracer particle and a liquid tracer particle at the in-cylinder flow measurement, the flow of the air-fuel mixture and the behavior of the flame in the flow field under the firing condition, can be grasped simultaneously while making contrast clear, and an appearance from the beginning of the expansion of the initial flame immediately after ignition to the air-fuel mixture to flame propagation entirely through a combustion chamber can be traced, linking the flow in detail.

### BRIEF DESCRIPTION OF FIGURES

Fig. 1 is a schematic view of an in-cylinder flow measuring system in an internal combustion engine of the present invention.
Fig. 2 is a front view of a partially cross-section of the internal combustion engine, i.e., the engine having an optically-visible cylinder used in the same device.
Fig. 3 is the front view of the partially cross-section of a liquid tracer particle supplier used in the same device.

### EMBODIMENTS FOR IMPLEMENTING THE INVENTION

In below, embodiment of the present invention is described in detail based on figures. Note that, following embodiments are essentially preferable examples, and the scope of the present invention, the application, or the use is not intended to be limited.

### EMBODIMENT

The present embodiment is an in-cylinder flow measuring system and a method thereof in an internal combustion engine that combines for use of a solid tracer particle and a liquid tracer particle.

### INTERNAL COMBUSTION ENGINE

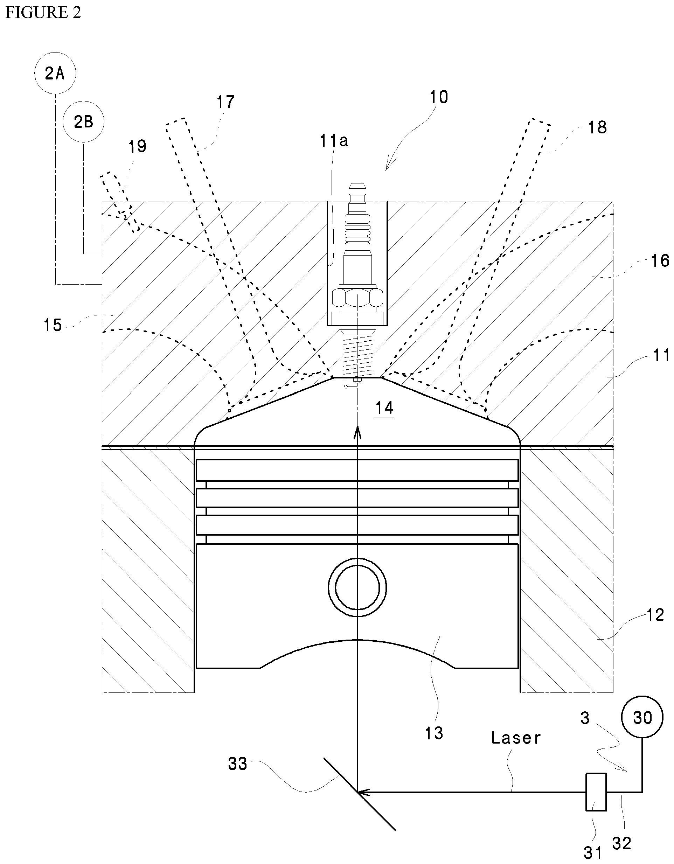

An internal combustion engine, an engine 10 having an optically-visible cylinder in the present embodiment (may referred to merely "optical engine 10"), is a reciprocating type, as illustrated in Fig. 2. The engine 10 includes a cylinder head 11 in which an optical part at a ceiling side wall defining a combustion chamber corresponds to a "pent-roof," a cylinder 12 of which an inner circumference surface, i.e., a sliding surface of a piston 13 corresponds to a "cylinder linear," and the piston 13 of which top surface corresponds to a "bottom" (in below, may referred to a "piston top"). The cylinder 12 is formed at the cylinder block. The piston 13 is provided inside the cylinder 12 freely to reciprocate. The cylinder head 11, the cylinder 12, and the piston 13, together define a combustion chamber 14. If the piston 13 reciprocates inside the cylinder 12 in the axial direction thereof, the motion of the piston 13 changes from reciprocation into rotation by the connecting rod (not-illustrated).

The cylinder head 11 is provided with a plug hole 11a for mounting a spark plug. An inner edge of the plug hole 11a is exposed to the combustion chamber 14. Moreover, the cylinder head 11 is provided with intake ports 15 and exhaust ports 16 exposed to the combustion chamber 14. The intake port 15 has an intake valve 17 and an injector 19. On the other hand, the exhaust port 16 is provided with an exhaust valve 18.

### -IN-CYLINDER FLOW MEASURING SYSTEM IN INTERNAL COMBUSTION ENGINE-

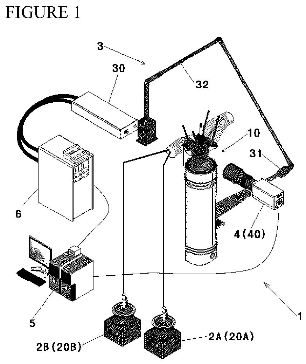

An in-cylinder flow measuring system 1 in the internal combustion engine of the present embodiment, as illustrated in Fig. 1, comprises the engine 10 having an optically-visible cylinder from at least one direction selected from three directions comprising a direction from the cylinder linear, a direction from the pent-roof, and a direction from the bottom, piston top such that a flow occurring inside the cylinder can be measured, a solid tracer particle supplier and a liquid tracer particle supplier 2A, 2B, each configured to supply a solid tracer particle and a liquid tracer particle separately into the cylinder of the engine 10 during the intake stroke. The in-cylinder flow measuring system 1 further comprises a laser irradiation apparatus 3 comprising a light source (laser light source) 30 for irradiating a laser beam and configured to form a laser sheet inside the cylinder, an imaging apparatus 4 configured to capture an image of the inside of the cylinder in which the laser sheet is formed by the laser irradiation apparatus 3, a controller 6 configured to control a synchronization of an oscillation period for the laser irradiation apparatus 3 to irradiate the laser light with a frame rate for the imaging apparatus 4 to capture the image, and an analyzer 5 configured to analyze the image captured by the imaging apparatus 4. Specifically, the in-cylinder flow measuring system 1 of the internal combustion engine in the present invention embodiment, is a measurement system with use of "PIV", i.e., "Particle Image Velocimetry Method," that measures and evaluates the air-fuel mixture flow under the firing condition, simultaneously as well as grasping the flame behavior in the flow field under the firing condition. According to the in-cylinder flow measuring system 1 of the internal combustion engine in the present invention embodiment, the liquid tracer particle is used, and, by igniting the air-fuel mixture in the vicinity of the compression top dead center, an image indicating a disappearance of a scattering light from the liquid tracer particles that exists at the flame outer edge through evaporation of the liquid tracer particles caused by the ignition of the air-fuel mixture, can be captured, and thereby, the flame expansion can be observed.

The tracer particle supplier 2A, 2B configured to supply the solid tracer particle and the liquid tracer particle separately, for example, supplies the particles in separate manner towards the intake air that flows through the intake port 15 of the internal combustion engine 10. The mounting position of the tracer particle supplier 2A, 2B is set for having a predetermined distance starting from the cylinder top surface, where the liquid tracer particle and the solid tracer particle are sufficiently diffused into the whole of the measured field without effecting to the flow, and there is no problem if there is separated greater than the above mentioned predetermined distance. In the present embodiment, the mounting position is set to the upstream of the entrance of the intake port 15.

The solid tracer particle supplier 2A comprises a tank 20A for storing the solid tracer particles, a supply flow rate adjuster for adjusting the solid tracer particles supply flow rate, a pressure gauge for the solid tracer particles, a feeder for supplying the solid tracer particles from the tank 20A to the intake port 15, and a pneumatic valve configured to prevent from suction by engine negative pressure when supplying the solid tracer particles into the intake port 15.

The solid tracer particles are stirred in the solid tracer particle supplier 2A so as to feed. The pneumatic valve is provided at the position of downstream of the tank 20A, and thereby, the suction of the solid tracer particles caused of the engine negative pressure can be prevented.

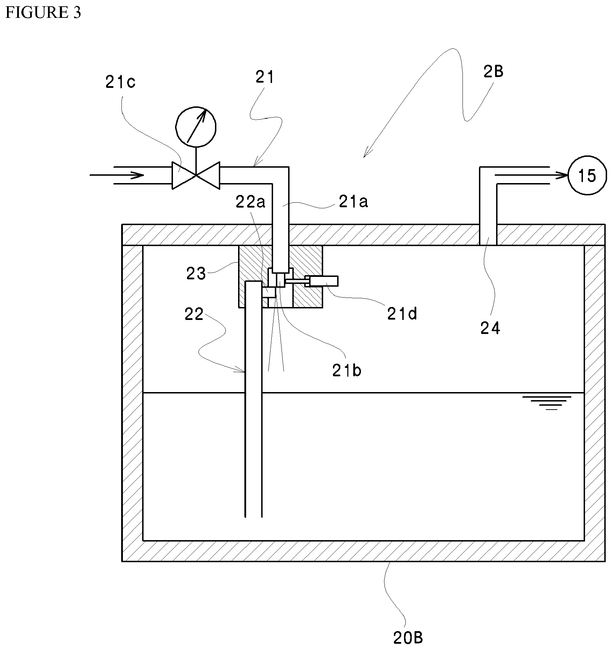

The liquid tracer particle supplier 2B, as illustrated in Fig. 3, comprises a tank 20B for storing liquid, a compression air injector 21 provided at the ceiling of the tank 20B and configured to feed compression air to the tank 20B, a liquid outlet pipe 22 provided with a liquid injection port 22a at the tip end thereof, and a release port 24 for releasing the liquid drop in the liquid tracer particle state into the intake port 15. The compression air injector 21 includes a compression air feed tube 21a configured to feed the compression air into the tank 20B, a compression air injection nozzle, orifice 21b configured to control the compression air flow rate and inject the compression air, and an adjusting screw 21d configured to adjust a distance between the compression air injection nozzle 21b and the liquid injection port 22a. The compression air feed tube 21a is arranged with a pressure reduction regulator 21c configured to adjust the air pressure. The numeral symbol "23" is a cylindrical mount member for arranging the compression air feed tube 21a, the liquid outlet pipe 22, and the adjusting screw 21d on the ceiling of the tank 20B.

The compressed air adjusted by the pressure reduction regulator 21c provided with the pressure gauge, is fed to the tank 20B for the liquid storage via the compression air feed tube 21a. On that timing, the negative pressure occurs since the compressed air is injected vigorously from the compression air injection nozzle 21b for controlling the flow rate, and the liquid inside the tank 20B can be sucked up to the liquid injection port 22a via the liquid outlet pipe 22. The sucked-up liquid changes into the liquid drop state, i.e., the liquid tracer. Then, the liquid tracer is fed together with the compressed air injected into the tank 20B from the release port 24 to the intake port 15 via a release route. The liquid tracer particle supply flow rate can be adjusted by adjusting a predetermined distance between the compression air injection nozzle 21b and the liquid injection port 22a by use of the adjusting screw 21d provided at the compression air injector 21. The distance between the compression air injection nozzle 21b and the liquid injection port 22a is adjusted to become closer, and thereby, much more liquid tracer particles can be generated.

When the compressed air is fed into the compression air injection nozzle 21b for controlling the compression air flow rate, a vacuum state with the negative pressure is made by Bernoulli's principle. Then, a large amount of the liquid drop, i.e., the atomized liquid tracer particles can be generated. This is similar to mechanism of so called "carburetor."

The laser irradiation apparatus 3 forms the laser sheet at the cylinder inside the internal combustion engine 10. Concretely, the laser irradiation apparatus 3 includes the laser light source 30 configured to emit the laser light, and a lens module 31 configured to throw the laser light emitted from the laser light source 30 into the air-fuel mixture flow field to be in thin sheet manner. The lens module 31 is formed at the tip end of a guide arm 32, and the laser light is introduced to near the optical engine 10 through the guide arm 32. The laser light irradiated from the lens module 31 at the tip end of the guide arm 32 is formed in thin sheet manner and emitted into the combustion chamber 14 via a mirror 33 from the downward of the piston 13, the laser-light-passing-part configured to be transparent and optical. The laser sheet thickness is not limited in particular, but, for example, set to be 2mm.

The laser emitted from the laser light source 30, a part of the laser irradiation apparatus 3, may be a CW laser or a pulse laser in principle. However, in view of securing sufficiently the reflection light strength from the solid tracer particle, the use of "pulse laser" is preferable since the high output can be obtained. Such a laser is, for example, Laser Diode (LD) pumped laser, specifically, Nd:YLF laser, Yb:YAG laser or Nd:YAG laser. In the present embodiment, Nd:YLF laser is used. Moreover, the laser wavelength is preferably 527 nm, and the repetition frequency at the largest is preferably set to 16.6 kHz. The frequency is controlled by the controller 6, and the scattering light of the tracer particle is captured in image by a high speed camera 40 of the imaging apparatus 4 explained in below in which a frame rate is synchronized with.

The high speed camera 40 as the imaging apparatus 4 is used in the present embodiment, and the high speed camera 40 is provided with an image sensor for obtaining images of the minute and fine tracer particles. The pixel number of the high speed camera 40 and the frame rate thereof is not limited in particular; however, the full-frame "1280 multiplied by 800" in pixels and "16600" fps at the largest is adopted in the present embodiment.

The laser light source 30 is connected to the controller 6, and the controller 6 performs the laser irradiation control so as to synchronize with a high speed gate of the high speed camera 40. Moreover, the controller 6 performs the noise suppression. The shutter mode in high speed can be realized by using the high-speed-gate-function responding to the high speed photographing timing. In the present embodiment, by shortening the gate width of the high speed camera 40, any interference can be prevented when the laser is irradiated, and the signal quality can be improved. Thereby, the image can accurately and precisely be captured since the contrast becomes clear, and the spatial resolution can be improved. Moreover, the laser repetition frequency at the largest emitted from the laser light source 30 is set to 16.6 kHz in the present embodiment, and then, synchronized with the pixels of the high speed camera 40 and frame rate at the largest 16600 fps.

If the minute and fine solid tracer particle supplied to the combustion chamber 14 has high burning resistance characteristic and high melting point, any type particle can be used. However, in the present embodiment, silica, SiO₂ particle is adopted. Except for silica SiO₂ particle, TiO₂ particle, i.e., titanium oxide, or ZrO₂ particle, i.e., zirconium particle, Al₂O₃ particle, i.e., aluminum particle can be raised as usable solid tracer particle. Moreover, the diameter of the solid tracer particle is not limited in particular; however, 4 µm is especially suitable. Much more reduction of the particle diameter can be enabled.

The particle with the characteristic of disappearance on the combustion timing, after throwing into the engine, is selected for the liquid tracer particle. Concretely explained, the appropriate particle does not disappear completely during the phase of the temperature rise at the compression stroke before the ignition, i.e., it has heat resistance towards the engine compression, and goes to disappear when contacting to the flame at the combustion stroke. From such a viewpoint, silicon oil is adopted in the present embodiment. Except for silicon oil, for example, paraffin, glycerin, can be used as the liquid tracer particle. Moreover, although not the liquid tracer particle, if the above-mentioned abilities are satisfied with, resin-based solid tracer particle, for example, can be adopted instead of the liquid tracer particle. The particle diameter of the liquid tracer particle inside the liquid tracer particle supplier 2B is not defined, and defined depending on the viscosity of the liquid. In the present embodiment, as mentioned above, the silicon oil is adopted.

The imaging apparatus 4 captures images of the scattering light of the tracer particles on the laser sheet, synchronizing with the laser irradiation timing by the laser irradiation apparatus 3.

The image datum outputted from the imaging apparatus 4 is stored inside a recorder of the analyzer 5. The analyzer 5 divides each of the image datum stored in the recorder into a plurality of interrogation areas. A correlation is obtained based on the particle image on each interrogation area of the image datum at successive two time intervals image-captured timings, and localized displacement vectors of the tracer particle image are determined. Further, based on the determined localized displacement vectors, the gas flow rate at corresponding position to each localized displacement vector is obtained. As the result, the localized flow rate at each lattice point in the cylinder is obtained by use of "PIV." Simultaneously, in the present embodiment, the flame outer edge can also be obtained by disappearance of the scattering light from the liquid tracer particle during the flame expansion.

The optical engine 10 captured the images of the tracer particles inside the visualized flow illuminated by the sheet light, is configured to enable to observe the inside of the cylinder from at least one direction selected from three directions comprising the direction from the cylinder linear, the direction from the pent-roof, and the direction from the piston top. The engine 10 is provided with an optical window on the pent-roof configured to visualize the flow near the spark plug, and a light introduction window configured to introduce the laser sheet inside. The translucent member with heat resistance characteristic for forming the optical part of the engine 10 is a quartz crystal, for example. The shape of the engine 10 is not limited to adoption in the present embodiment. The optical engine 10 specifications, are, for example, four strokes including intake, compression, combustion and expansion, and exhaust, one cylinder, displacement 500 cc, bore multiplied by stoke 86 mm × 86 mm, the compression ratio 10.4, and number of valves, two intake valves and two exhaust valves.

The measurement condition of the in-cylinder flow of the internal combustion engine in the present embodiment is explained in detail. The below condition is an example, and not limited to.

The high speed PIV measurement condition is:
the sampling frequency is 7.2 kHz (engine speed is 1200 rpm),
the measurement cycle number is 19 in a row,
the laser sheet thickness is 2 mm,
the image size is 1280 × 800 in pixels (59 mm × 37 mm),
the interrogation area is 32 × 32 in pixels (1.5 mm × 1.5 mm), and
the overlap rate is 50 %.

The engine operation condition is as follows:
the engine operation mode is "firing,"
the engine speed is 1200 rpm,
the intake air pressure is 60 kPa,
Air/Fuel ratio, A/F, is 14.7,
the ignition timing is 15degBTDC.

Next, a method of measuring a flow occurring inside a cylinder of an engine that combines for use of the solid tracer particle and the liquid tracer particle is explained.

In the present embodiment, the method is to measure a flow occurring inside a cylinder of an engine which is optically visible from at least one direction selected from three directions comprising the direction from the cylinder linear, the direction from the pent-roof, and the direction from the piston top. Concretely explained, the laser source 30 of the laser irradiation apparatus 3 emits the laser beam at the repetition frequency at the largest, 16.6 kHz, taking a predetermined time interval. Then, the laser beam emitted from the laser source 30 is introduced to the vicinity of the engine 10 via the guide arm 32. The laser irradiation apparatus 3 forms the laser sheet with the laser light inside the cylinder in thickness about 2 mm by the lens module 31 positioned at the tip end of the guide arm 32. The laser sheet is formed by throwing the laser beam irradiated from the laser source 30 from the bottom into the cylinder via the mirror 33 positioned at downward of the piston 13. Moreover, in the case of the in-cylinder flow measurement for flame propagation in the present embodiment, the laser sheet formation is made by passing through a center point of the cylinder, and arranged in line extending in straight manner between two intake ports 15 and between two exhaust ports 16, with contacting a point of tangent on circumferences of the intake ports 15 and the exhaust ports 16.

As mentioned, the solid tracer particles are stirred in the solid tracer particle supplier 2A, and the solid tracer particles can relatively-evenly be supplied into the flow field. Moreover, regarding the liquid tracer particles, the liquid is sucked up from the bottom by using so called, "the mechanism of carburetor," and then, a large number of atomized liquid tracer particles can be generated, and evenly uniformly sheeting can be enabled.

The process of supplying the solid tracer particle and the liquid tracer particle together with an air-fuel mixture into the flow field of the engine 10 during the intake stroke, is explained in below. The solid tracer particle is supplied from the solid tracer particle supplier 2A and thrown into the flow field of the engine 10 via the intake port 15 through the supply route. The liquid tracer particle is released from the release port 24 of the liquid tracer particle supplier 2B and thrown into the flow field of the engine 10 via the intake port 15.

In below, the measurement of the solid tracer particle in the flow field is explained in detail.

In the present embodiment, the silica SiO₂ particle having significant traceability and having 4µm diameter, the size having large mean particle diameter and within range of enabling to secure the traceability, is used in the flow field under the firing condition in order to strengthen and enhance the scattering light of the solid tracer particle. Moreover, a black paint is coated around the wall surface except for the optical window in order to reduce reflection light at the wall surface and the noise of the particle image.

The supply amount of the solid tracer particles is reduced and narrowed at the burned part. Specifically, the particle number in density of the solid tracer particles becomes low by the air-fuel mixture expansion, and this is a factor of reduction of the scattering light of the tracer particle. When the solid-tracer-particle-supply-amount is increased in accordance with the reduction of the particle number in density, there becomes a state where the luminance at the unburned part with high particle number in density is easy to saturate. For that reason, compared to the motoring condition, an efficient range of proper particle amount becomes smaller, and it is difficult to adjust properly the solid-tracer-particle-supply-amount on the measurement timing. The proper range of the solid-tracer-particle-supply-amount depends on "SN ratio, i.e., Signal-to-Noise Ratio." When the SN ratio is high, in other word, the stronger the particle scattering light as being signal is and the weaker other noise is, the adjustment of the solid-tracer-particle-supply-amount is easy to control, i.e., it is easy to measure and evaluate. In the present embodiment, as mentioned, enhancing the scattering light of the solid tracer particle covers the reduction and narrowing of the solid-tracer-particle-supply-amount. Moreover, the coating of the black paint around part except for the optical window helps to reduction of reflection light at the wall surface.

Moreover, in the present embodiment, a band pass filter having a center wavelength 527 nm matching with the laser wavelength is used in order to eliminate or cut-off the flame emission, and image-capturing is performed. When the solid tracer particles are thrown into the flow field, the emission light from the flame itself is reflected in image by camera other than the scattering light from laser. The emission light deprived from the flame seen at the burned part includes a vector element in depth direction towards the measurement cross section. Therefore, the flame emission light should be eliminated since the cross sectional measurement at the burned part cannot be performed from that image. From the above viewpoint, the band pass filter having the center wavelength 527 nm matching with the laser wavelength is used in the present embodiment, and therefore, a large part of the flame spectrum can be eliminated. Moreover, the captured image comprises only the scattering light by laser, specifically, only the element inside the measurement cross section including the burned part.

The particles are existed for expansion at the burned part in the obtained image as above, while the average luminance at the burned part becomes lower than the unburned part. Accordingly, the shape of the flame front can be specified by detecting the boundary of difference in luminance. Thereby, the simultaneous measurement of the flow velocity and the flame front shape can be enabled.

Then, the measurement at the flow field of the liquid tracer particle is explained in detail.

The particle with the characteristic of not disappearing completely during the phase of the temperature rise at the compression stroke before the ignition, i.e., the particle having the heat resistance towards the engine compression, and goes to disappear when contacting to the flame during the combustion stroke, for example, silicon oil is selected as the liquid tracer particle in the present embodiment. Accordingly, when such a liquid tracer particle is thrown into the flow field at the intake stroke, the liquid tracer particle is existed evenly in the flow field from the intake stroke, through the compression stroke to the combustion stroke, until ignition to the air-fuel mixture. Then, the liquid tracer particle that exists at the outer edge of the flame evaporates by ignition of the air-fuel mixture during the combustion stroke, and then, an appearance of disappearance of the scattering light from the liquid tracer particle can be captured as image by camera. On the other hand, the solid tracer particles trace the flow of unburned mixture and the flow of burned gas. As the result, movements of the liquid tracer particle and the solid tracer particle in accordance with the flow of the unburned mixture, as well as a movement of the solid tracer particle in accordance with the flow of the unburned mixture and the flow of the burned gas, can be captured as image simultaneously. Thereby, compared to the case of measurement by only use of the solid tracer particle, the complex image of air-fuel mixture flow and flame propagation at the flow field where the combustion-state-change is active, can be captured more accurately and precisely through the whole of the combustion chamber.

As mentioned, monitoring of flow of the unburned mixture by the liquid tracer particle and the solid tracer particle, as well as monitoring of flow of the unburned mixture and flow of the burned gas by the solid tracer particle can be performed simultaneously by throwing the liquid tracer particle and the solid tracer particle into, while, at the same time, an appearance of the disappearance of the scattering light from the liquid tracer particle that exists at the flame outer edge through evaporation of the liquid tracer particles can be observed.

### -EFFECT OF EMBODIMENT-

According to the present embodiment, an in-cylinder flow before and after compression top dead center and an initial flame under the firing condition can be visualized. The contrast is made clear when images of the air-fuel mixture flow as well as the flame behavior in the flow field under the firing condition are simultaneously captured by combining for use of a solid tracer particle and a liquid tracer particle together, while an appearance of the flame expansion from the initial flame immediately after ignition to air-fuel mixture through the whole of the combustion chamber can be traced, liking to the flow in detail.

### INDUSTRIAL APPLICABILITY

As explained, an in-cylinder flow measuring system and a method thereof can suitably be utilized for a measurement system for analyzing an in-cylindrical flow of an internal combustion engine under the firing condition.

### NUMERAL SYMBOLS EXPLANATION

- 1.: In-cylinder Flow Measuring System
- 2.: Tracer Particle Supplier
- 2A.: Solid Tracer Particle Supplier
- 2B.: Liquid Tracer Particle Supplier
- 3.: Laser Irradiation Apparatus
- 30.: Laser Source
- 4.: Imaging Apparatus
- 5.: Analyzer
- 6.: Controller
- 10.: Engine

## Claims

1. An in-cylinder flow measuring system comprising:
an engine having an optically-visible cylinder from at least one direction selected from three directions comprising a direction from a cylinder linear, a direction from a pent-roof, and a direction from a piston top such that a flow occurring inside the cylinder can be measured;
a solid tracer particle supplier configured to supply a solid tracer particle into the cylinder of the engine during an intake stroke;
a liquid tracer particle supplier configured to supply a liquid tracer particle into the cylinder of the engine during the intake stroke;
a laser irradiation apparatus comprising a light source for irradiating a laser light and configured to form a laser sheet inside the cylinder by the laser light irradiated from the light source;
an imaging apparatus configured to capture an image of the inside of the cylinder in which the laser sheet is formed by the laser irradiation apparatus;
a controller configured to synchronize an oscillation period for the laser irradiation apparatus to irradiate the laser light with a frame rate for the imaging apparatus to capture the image; and
an analyzer configured to analyze the image captured by the imaging apparatus.

2. A method of measuring a flow occurring inside a cylinder of an engine which is optically visible from at least one direction selected from three directions comprising a direction from a cylinder linear, a direction from a pent-roof, and a direction from a piston top, the method comprising:
irradiating a laser light from a light source into the cylinder and forming a laser sheet with the laser light inside the cylinder;
supplying separately a liquid tracer particle and a solid tracer particle together with an air-fuel mixture into the cylinder of the engine during an intake stroke;
igniting the air-fuel mixture, thereby forming a flame, which involves a flow of an unburned air-fuel mixture and a flow of burned gas, while capturing an image in the cylinder at a timing around a top dead center during a compression stroke, such that the image indicates a disappearance of a scattering light from the liquid tracer particle that exists at an outer edge of the flame through evaporation of the liquid tracer particles caused by the ignition of the air-fuel mixture and indicates movements of the liquid tracer particle and the solid tracer particle in accordance with the flow of the unburned mixture and a movement of the solid tracer particle in accordance with the flow of the unburned mixture and the flow of the burned gas; and
analyzing the captured image to measure the flow occurring inside the cylinder.
